# FASCICULE DE BREVET EUROPEEN

(11) **EP 1 940 071 B1**
(45) Date de publication et mention de la délivrance du brevet: **25.07.2012**
(21) Numéro de dépôt: 07124061.8
(22) Date de dépôt: 24.12.2007
(51) Int. Cl.: H04L 7/04, H04L 27/227

(54) **Procédé et dispositif pour décoder un signal**
Verfahren und Vorrichtung zur Signaldekodierung
Method and device for decoding a signal

(30) Priorité: 26.12.2006 FR 0655951
(43) Date de publication de la demande: 02.07.2008
(73) Titulaire: STMICROELECTRONICS S.A., 92120 Montrouge (FR)
(72) Inventeur: Meyer, Jacques, 38950, SAINT MARTIN LE VINOUX (FR)
(74) Mandataire: de Beaumont, Michel

(56) Documents cités:
- US-A1- 2004 252 725
- US-A1- 2006 067 432
- "Digital Video Broadcasting (DVB) User guidelines for the second generation system for Broadcasting, Interactive Services, News Gathering and other broadband satellite applications (DVB-S2)" ETSI STANDARDS, EUROPEAN TELECOMMUNICATIONS STANDARDS INSTITUTE, SOPHIA-ANTIPO, FR, vol. BC, no. V111, février 2005 (2005-02), XP014027139 ISSN: 0000-0001

## Description

### Domaine de l'invention

La présente invention concerne la transmission de données, en particulier lorsque les données sont groupées en trames ou blocs comportant des en-têtes.

### Exposé de l'art antérieur

La demande de brevet US 2004/0252725 (Sun Feng-Wen et al.) s'occupe de synchronisation de trames dans un système utilisant des codes LDPC ("Low Density Parity Check").

La demande de brevet US 2006/0067432 (Thesling William et al.) décrit un système dans lequel les informations de l'en-tête servent à réaliser des synchronisations de trame et de fréquence.

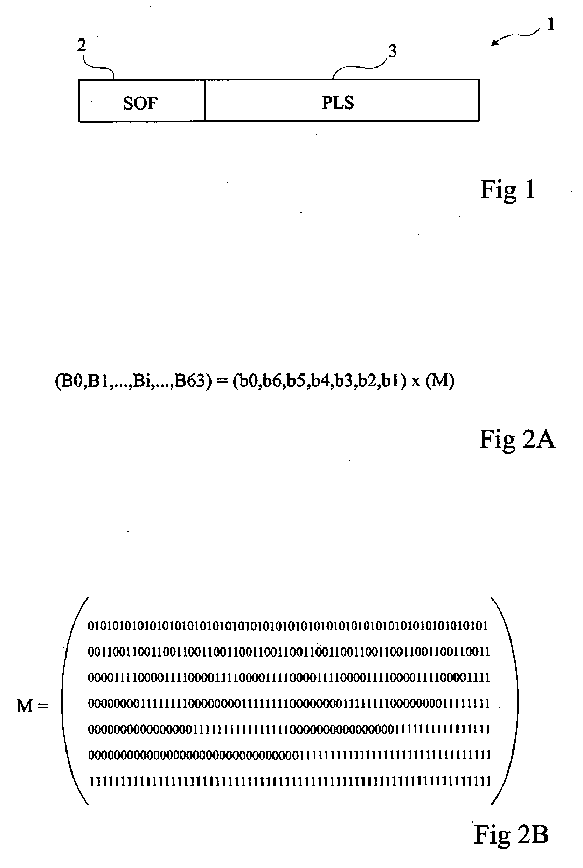

La figure 1 représente la structure d'un en-tête de trame 1 dans une transmission de données telle qu'actuellement prévue par la norme DVBS2 (Digital Video Broadcasting Satellite).

L'en-tête 1 comprend 90 symboles et est formé d'une partie 2 notée "SOF" ("Start Of Frame") et une partie 3 notée "PLS" ("Physical Layer Structure").

La partie SOF comprend 26 symboles correspondant à une séquence connue de 26 bits. Pour obtenir ces 26 symboles, les 26 bits de la séquence connue sont codés selon une modulation de type π/2.BPSK. Selon cette modulation, un symbole e^{jϕ} ou -e^{jϕ} est affecté à chaque bit 0 ou 1 et en outre les symboles pairs et impairs présentent un décalage de phase de π/2 les uns par rapport aux autres.

La partie PLS comprend 64 symboles, et définit la structure des éléments de la trame, comme le type de codage des données, la modulation utilisée, la longueur de la trame, la présence de pilotes, les pilotes correspondant à un ensemble de symboles connus du démodulateur et permettant de faciliter l'estimation des paramètres de réception, etc... Les 64 symboles de la partie PLS proviennent d'un mot de code de 7 bits b0-b6 correspondant à 2⁷ soit 128 possibilités de codage pour la trame. Certains bits du mot de code jouent un rôle particulier. Ainsi, le bit b1 indique si la trame est longue ou courte et le bit b0 indique la présence ou l'absence de pilotes.

Les figures 2A et 2B illustrent une façon d'obtenir les 64 symboles à partir des 7 bits du mot de code. En figure 2A, 64 bits B0, B1, ..., Bi, ..., B63 sont obtenus en multipliant un vecteur ligne (b0, b6, b5, b4, b3, b2, b1) formé des bits du mot de code par une matrice M comportant 7 lignes et 64 colonnes. La matrice M est représentée en figure 2B. Les 64 bits Bi issus de la multiplication sont alors combinés (par OU Exclusif) à un mot connu UW ("Unique Word") pour améliorer la répartition spectrale de l'énergie du signal et transformés en symboles par une modulation de type π/2.BPSK. Les 64 symboles obtenus sont inconnus du récepteur, mais on sait à la réception qu'ils font partie d'un ensemble déterminé de 128 possibilités.

Une difficulté pour décoder le signal est de déterminer les en-têtes de trame.

Par exemple, lors d'une première acquisition (mise sous tension, changement de chaîne de télévision, évanouissement de l'information, comme lors du passage sous un tunnel en réception mobile), la position de l'en-tête est inconnue et l'en-tête peut commencer à n'importe quel symbole. Il faut aussi tenir compte dans ce cas du décalage de la fréquence porteuse. Ce décalage, dû aux divers changements de fréquence subis par le signal, est alors inconnu et son effet est d'affecter à chaque symbole une erreur de phase proportionnelle au temps. Le décalage de la fréquence porteuse peut être très grand, comme par exemple aller jusqu'à 20 % de la fréquence des symboles.

En régime établi, où le décodage du mot de code de l'en-tête précédent fournit la longueur de la trame et par conséquent la position de l'en-tête suivant, le mot de code peut varier d'une trame à l'autre et un soin particulier doit être apporté à la détermination de l'en-tête.

Un objet de la présente invention est de prévoir un procédé et/ou un dispositif pour pallier aux inconvénients de l'art antérieur et/ou proposer un équivalent aux procédés et/ou dispositifs de l'art antérieur.

Un objet de la présente invention est ainsi de prévoir un procédé et/ou un dispositif pour décoder un signal de façon efficace.

Un autre objet de la présente invention est de prévoir un procédé et/ou un dispositif pour déterminer un en-tête de trame de façon efficace.

Un autre objet de la présente invention est de prévoir un procédé et un dispositif tel que décrit ou suggéré dans une partie quelconque de la présente demande.

### Résumé de l'invention

Pour atteindre tout ou partie de ces objets ainsi que d'autres, qui apparaîtront à la lumière de la présente demande, la présente invention prévoit un procédé pour déterminer un en-tête de trame formé d'échantillons ayant été codés de sorte qu'un échantillon présente soit la valeur A.e^{jθ} soit la valeur A.e^{j(θ+π)} et comportant au moins N1 premiers échantillons correspondant à une première séquence déterminée et N2 deuxièmes échantillons correspondant à une deuxième séquence faisant partie d'un ensemble de N deuxièmes séquences déterminées, les N2 deuxièmes échantillons étant soit égaux deux à deux, soit opposés deux à deux, comprenant :
a) une étape de corrélation portant sur N1 échantillons, dans laquelle une corrélation est effectuée entre le produit d'un échantillon et du conjugué d'un échantillon adjacent et les valeurs correspondantes de la première séquence pour produire un premier résultat ;
b) une étape de corrélation portant sur N2 échantillons, dans laquelle est effectuée la somme des produits d'un échantillon d'un couple de deux échantillons successifs par le conjugué de l'autre échantillon du couple pour produire un deuxième résultat ;
c) une étape de détection d'un en-tête de trame à partir des premier et deuxième résultats ; et
d) une étape de validation de l'en-tête de trame détecté.

Selon un mode de réalisation de la présente invention, l'étape de validation comporte les étapes suivantes :
e) corriger les premiers et deuxièmes échantillons de l'en-tête détecté pour un décalage de fréquence déterminé ;
f) déterminer un maximum de corrélation portant sur les premiers et deuxièmes échantillons corrigés, étape au cours de laquelle sont effectuées d'une part la corrélation entre chaque premier échantillon corrigé et la valeur correspondante de la première séquence et d'autre part la corrélation entre chaque deuxième échantillon et la valeur qu'il aurait dans chacune des N deuxièmes séquences déterminées ;
g) recommencer, pour un nombre déterminé de valeurs de décalage de fréquence, les étapes de correction e) et de corrélation f) avec une autre valeur de décalage de fréquence ; et
h) valider l'en-tête de trame à partir des maxima de corrélation déterminés à l'étape f).

Selon un mode de réalisation de la présente invention, un en-tête de trame est détecté si la somme des parties réelles des corrélations réalisées aux étapes a) et b) est supérieure à un premier seuil.

Selon un mode de réalisation de la présente invention, l'en-tête de trame détecté est validé si le plus grand des modules des maxima de corrélation déterminés à l'étape f) est supérieur à un deuxième seuil.

Selon un mode de réalisation de la présente invention, les premiers et deuxièmes échantillons proviennent de bits ayant subi une modulation de type π/2.BPSK.

La présente invention prévoit aussi un circuit pour déterminer un en-tête de trame formé d'échantillons ayant été codés de sorte qu'un échantillon présente soit la valeur A.e^{jθ} soit la valeur A.e^{j(θ+π)} et comportant au moins N1 premiers échantillons correspondant à une première séquence déterminée et N2 deuxièmes échantillons correspondant à une deuxième séquence faisant partie d'un ensemble de N deuxièmes séquences déterminées, les N2 deuxièmes échantillons étant soit égaux deux à deux, soit opposés deux à deux, comprenant :
a) un circuit de détection pour détecter un en-tête de trame, le circuit comprenant :
   a1) un premier circuit portant sur N1 échantillons, pour effectuer une corrélation entre le produit d'un échantillon et du conjugué d'un échantillon adjacent et les valeurs correspondantes de la première séquence ;
   a2) un deuxième circuit portant sur N2 échantillons, pour effectuer la somme des produits d'un échantillon d'un couple de deux échantillons successifs par le conjugué de l'autre échantillon du couple ;
   a3) un premier additionneur pour additionner les résultats issus des premier et deuxième circuits ; et
   a4) un module de détection pour détecter un en-tête de trame lorsque la partie réelle du résultat fourni par le premier additionneur est supérieure à un premier seuil ; et
b) un circuit de validation et de décodage pour valider et décoder l'en-tête détecté par le circuit de détection, le circuit de validation et de décodage comprenant :
   b1) un troisième circuit portant sur les N1 premiers échantillons de l'en-tête détecté, pour effectuer une corrélation entre chaque premier échantillon et la valeur correspondante de la première séquence ;
   b2) un quatrième circuit portant sur les N2 deuxièmes échantillons de l'en-tête détecté, pour effectuer une corrélation entre chaque deuxième échantillon et la valeur qu'il aurait dans une deuxième séquence particulière ; et
   b3) un cinquième circuit pour déterminer le plus grand des modules des sommes des corrélations effectuées par les troisième et quatrième circuits, N corrélations étant réalisées par le quatrième circuit et un en-tête étant validé si le plus grand des modules est supérieur à un deuxième seuil; et
   b4) un sixième circuit pour fournir aux troisième et quatrième circuits des échantillons corrigés pour un décalage de fréquence de porteuse particulier.

Selon un mode de réalisation de la présente invention, le premier circuit comporte N1-2 premiers éléments à retard, N1-1 premiers modules de gain couplés aux premiers éléments à retard et un deuxième additionneur couplé aux premiers modules de gain, et le deuxième circuit comporte N2 deuxièmes éléments à retard, N2/2 deuxièmes modules de gain couplés aux deuxièmes éléments à retard et un troisième additionneur couplé aux deuxièmes modules de gain.

Selon un mode de réalisation de la présente invention, le paramètre N1 est égal à 26, le paramètre N2 est égal à 64, le paramètre N est égal à 128, le quatrième circuit utilise une transformée rapide de Hadamard et fournit de manière séquentielle deux fois 32 corrélations réalisées à l'aide de N2/2 deuxièmes échantillons, le cinquième circuit comprend un quatrième additionneur pour effectuer la différence entre la corrélation effectuée par le troisième circuit et la corrélation effectuée par le quatrième circuit, un cinquième additionneur pour effectuer la différence entre la corrélation effectuée par le troisième circuit et la corrélation effectuée par le quatrième circuit, un module pour déterminer le module des résultats issus des quatrième et cinquième additionneurs et en sélectionner le plus grand.

Selon un mode de réalisation de la présente invention, le circuit comprend en outre un septième circuit propre à évaluer la moyenne des phases des premiers et deuxièmes échantillons d'un en-tête valide ainsi que la moyenne des phases de n1 échantillons d'un en-tête valide et la moyenne des phases de n2 échantillons d'un en-tête valide, pour en déduire la phase moyenne présentée par les échantillons et la variation de la phase moyenne des échantillons.

Selon un mode de réalisation de la présente invention, les premiers et deuxièmes échantillons proviennent de bits ayant subi une modulation de type π/2.BPSK.

La présente invention prévoit aussi un décodeur ou un démodulateur comprenant un circuit tel que décrit ci-dessus.

La présente invention prévoit aussi un récepteur ou un ordinateur ou un téléphone portable comprenant un circuit tel que décrit ci-dessus.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente la structure d'un en-tête de trame classique ;
la figure 2 représente une matrice classique utilisée dans le codage de l'en-tête de la figure 1 ;
la figure 3 représente un schéma d'acquisition d'un en-tête ; et
les figures 4 et 5 représentent des circuits pour valider et décoder un en-tête.

### Description détaillée

Par souci de clarté, de mêmes éléments ont été désignés par de mêmes références aux différentes figures et, de plus, comme cela est habituel dans la représentation des circuits intégrés, les diverses figures ne sont pas tracées à l'échelle.

La présente invention s'applique à la détermination des en-têtes de trames transmises selon la norme DVBS2. Cependant, la présente invention ne s'applique pas qu'à cette norme. Ainsi, la présente invention permet de détecter des en-têtes, dans toute transmission où le signal est ou a été codé en blocs ou trames comprenant un en-tête comportant au moins N1 + N2 échantillons codés de sorte qu'un échantillon présente soit la valeur A.e^{jθ} soit la valeur A.e^{j(θ+π)}, parmi lesquels les N1 échantillons correspondent à une séquence connue et les N2 échantillons correspondent à une séquence faisant partie d'un ensemble de N séquences possibles connues, les N2 échantillons étant tous deux à deux égaux ou opposés. L'en-tête peut comporter plus de N1+N2 échantillons, les N1+N2 échantillons de l'en-tête ne sont pas nécessairement consécutifs ; en particulier l'en-tête peut commencer ailleurs qu'en début de trame ou être répété en cours de trame, etc. Aussi, il n'est pas nécessaire dans la présente invention que les échantillons aient subi une modulation de type π/2.BPSK, il suffit que les échantillons puissent être représentés à un stade quelconque soit par la valeur A.e^{jθ} soit la valeur A.e^{j (θ+π)}.

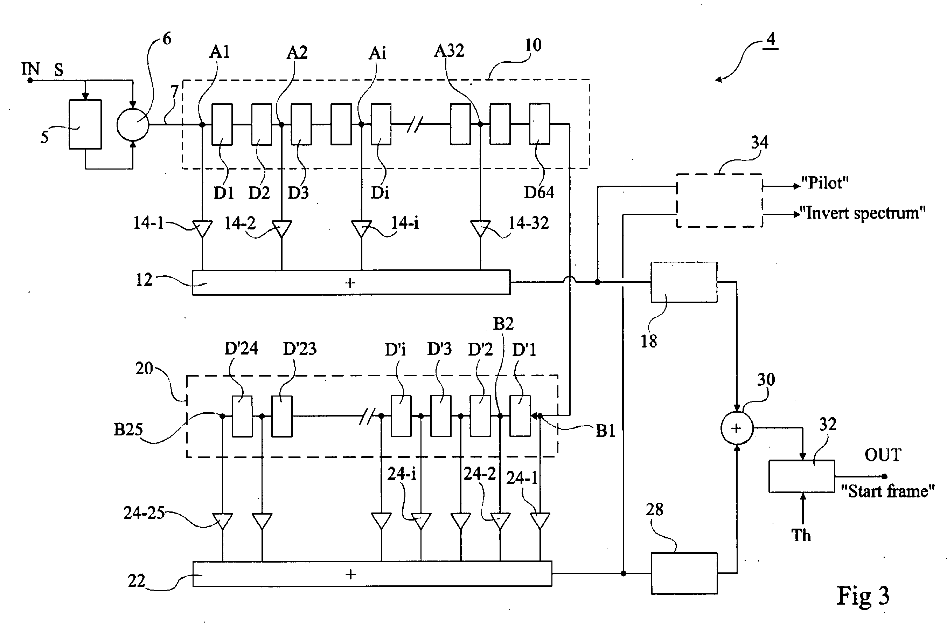

La figure 3 représente un schéma d'un circuit 4 d'acquisition d'un en-tête selon la norme DVBS2, c'est-à-dire avec N1 = 2.6 (partie SOF) et N2 = 64 (partie PLS). Le circuit 4 reçoit par une entrée IN un signal S démodulé formé de symboles ou échantillons Sₙ comprenant une composante en phase et une composante en quadrature et pouvant être représentés par un nombre complexe. Le signal S est conduit à un élément à retard 5 qui provoque un retard d'un symbole et à un élément de calcul 6. L'élément de calcul 6 réalise la multiplication d'un symbole courant Sₙ par le conjugué du symbole précédent S*ₙ₋₁ et fournit sur une ligne 7 la partie réelle du résultat de la multiplication. La ligne 7 attaque une ligne à retard 10 comprenant 64 éléments à retard D1 à D64 et 32 prises intermédiaires A1 à A32. Les éléments à retard D1 à D64 sont connectés en série et provoquent chacun un retard égal à la durée d'un symbole. La prise intermédiaire A1 se situe à l'entrée du premier élément à retard, D1, et il y a une prise intermédiaire tous les deux symboles. Chacune des prises intermédiaires Ai est reliée à un additionneur 12 à 32 entrées via un module de gain 14-1 à 14-32. Chaque module de gain 14-i peut être programmé à la valeur +1 ou à la valeur -1.

La ligne à retard 10 attaque une ligne à retard 20. La ligne à retard 20 comprend 24 éléments à retard D'1 à D'24 et 25 prises intermédiaires B1 à B25. Les éléments à retard D'1 à D'24 sont connectés en série et provoquent chacun un retard égal à la durée d'un symbole. La prise intermédiaire B1 se situe à l'entrée du premier élément à retard, D'1, et il y a une prise intermédiaire après chaque élément à retard D'i. Chacune des prises intermédiaires Bi est reliée à un additionneur 22 à 25 entrées via un module de gain 24-1 à 24-25. Chaque module de gain 24-i peut être programmé à la valeur +1 ou à la valeur -1.

L'additionneur 12 est relié à un module 18 qui fournit la valeur absolue du résultat fourni par l'additionneur 12. L'additionneur 22 est relié à un module 28 qui fournit la valeur absolue du résultat fourni par l'additionneur 22. Les modules 18 et 28 sont reliés à un additionneur 30 qui additionne les résultats fournis par les modules 18 et 28. L'additionneur 30 est relié à un module comparateur 32 qui compare le résultat fourni par l'additionneur 30 à un seuil Th et fournit un signal "Start frame" sur une sortie OUT si le seuil Th est dépassé.

De manière optionnelle, un module 34, en pointillés en figure 3, est relié aux sorties des additionneurs 12 et 22 pour fournir des signaux "Pilot" et "Invert spectrum", servant à indiquer respectivement la présence ou non de pilotes et si le spectre a été inversé. Cet aspect ne sera pas détaillé. On pourra se reporter pour plus de détails à la demande de brevet européen N° 06 368 011.0 de la demanderesse et du même inventeur, non encore publiée, incluse ici à titre de référence, déposée le 1er juillet 2005 et ayant pour titre "Procédé de correction automatique de l'inversion spectrale dans un démodulateur et dispositif pour mettre en oeuvre le procédé".

Le fonctionnement du circuit 1 est le suivant.

A un instant donné, chacune des 25 prises intermédiaires 24-i fournit un signal égal à la partie réelle du produit (Sₙ.S*ₙ₋₁). Un symbole reçu Sₙ est égal au symbole émis aₙ multiplié par e^{jϕ}n, ϕₙ étant une erreur de phase due notamment au décalage de la fréquence porteuse. Sₙ.S*ₙ₋₁ est égal au produit aₙ.a*ₙ₋₁.e^{j(ϕₙ-ϕₙ₋₁)}. Dans le cas général où aₙ=A.e^{jθₙ} ou A.e^{j(θₙ+π)}, le produit aₙ.a*ₙ₋₁ est égal à 1 si aₙ=aₙ₋₁ et à -1 si aₙ est opposé à aₙ₋₁. Les modules de gain 24-i sont portés à 1 ou à -1 selon que deux éléments successifs de la séquence connue de la partie SOF sont égaux ou non. L'additionneur 22 fournit ainsi un résultat qui sera maximal (en valeur absolue, l'additionneur 22 fournissant un résultat négatif en cas d'inversion spectrale) en cas de corrélation parfaite entre les 26 échantillons concernés par la ligne à retard 20 et les 26 échantillons de la partie SOF. On notera que le fait de grouper les échantillons deux par deux (en formant des paires recouvrantes où chaque échantillon fait successivement partie de deux paires successives) permet de limiter l'effet du décalage de fréquence. En effet, on réalise ainsi une corrélation que l'on peut dire "différentielle" qui fait que la différence de phase entre deux éléments "différentiels" successifs (par exemple Sₙ.S*ₙ₋₁ et Sₙ₊₁.S*ₙ) est égale à la différence de phase entre deux échantillons successifs, cette différence de phase variant beaucoup moins vite que la phase elle-même.

Dans la présente invention, pour déterminer une acquisition rapide et efficace de l'en-tête, on utilise aussi une corrélation dite aussi "différentielle" utilisant les échantillons de la partie PLS. Comme pour la partie SOF, les échantillons successifs sont traités par groupes de deux. Ici cependant, les échantillons sont groupés par paires disjointes, un échantillon n'intervenant que dans une paire à la fois. On notera ici que la matrice M est telle que, si le bit b0 vaut 0, chacun des 32 bits Bi de rang impair est égal à son prédécesseur et, si le bit b0 vaut 1, chacun des 32 bits Bi de rang pair est suivi de son inverse.

Dans la corrélation effectuée, dans chaque paire, le produit d'un échantillon par l'échantillon précédent conjugué est corrélé au vecteur unitaire, c'est-à-dire que l'on réalise, pour n=13 à n=44, la somme des produits S₂ₙ₊₁·S*₂ₙ· Les bornes n=13 et n=44 sont choisies pour que les échantillons concernés correspondent aux échantillons S₂₆ à S₈₉, c'est-à-dire aux 64 échantillons de la partie PLS. La corrélation avec le vecteur unitaire est choisie car l'inventeur a remarqué que, lorsque deux symboles successifs de la partie PLS sont égaux, le symbole différentiel S₂ₙ₊₁.S*₂ₙ était égal à 1 (ou plus généralement au carré de l'amplitude A d'un symbole) et, si deux symboles successifs de la partie PLS sont opposés, le symbole différentiel S₂ₙ₊₁.S*₂ₙ était égal à -1 (ou plus généralement à moins le carré de leur amplitude A). Les modules de gain 14-i multiplient par +1 ou par -1 les 32 symboles différentiels de la partie PLS selon la valeur des bits "différentiels" correspondants du mot UW (en pratique, le module 14-i effectue une multiplication par +1 si les deux bits concernés du mot UW sont égaux, et une multiplication par -1 dans le cas contraire).

Les modules 18 et 28 permettent de s'affranchir d'un résultat négatif (le module de calcul 18 reçoit une corrélation de signe négatif si le bit de pilote vaut 1 et s'il n'y a pas d'inversion spectrale, et le module de calcul 28, qui pourrait être supprimé si le signal ne présente jamais d'inversion spectrale, reçoit une corrélation négative en cas d'inversion spectrale). La détection d'un en-tête est fournie lorsque le seuil Th est dépassé.

Ainsi, pour tout nouveau symbole arrivant, le circuit 4 examine si les 90 échantillons dernièrement reçus peuvent constituer un candidat valable pour un en-tête de trame. Si tel est le cas, un signal "start frame" est émis. Il reste à valider ce résultat.

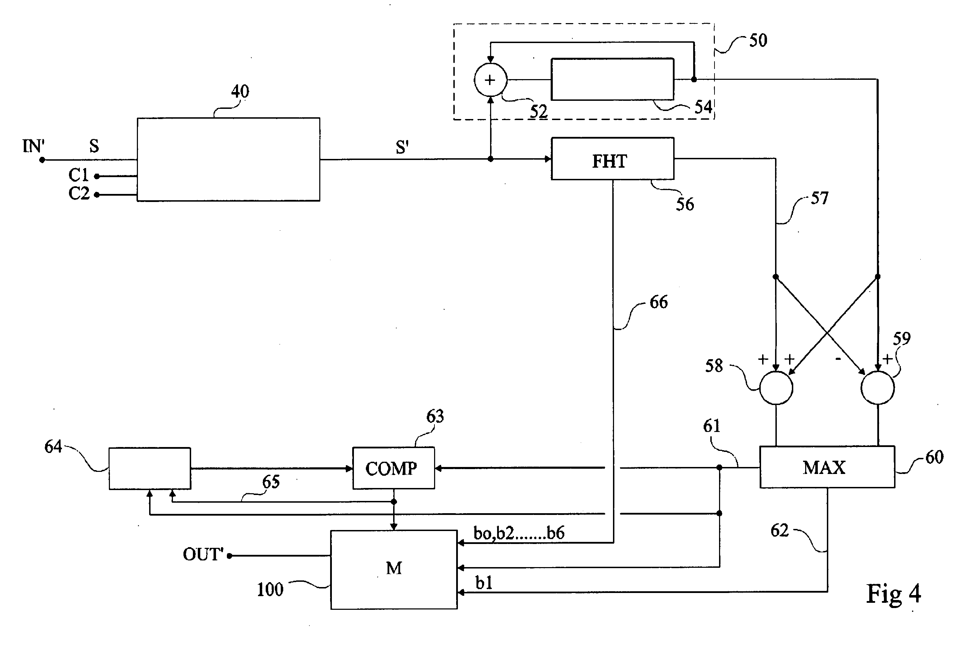

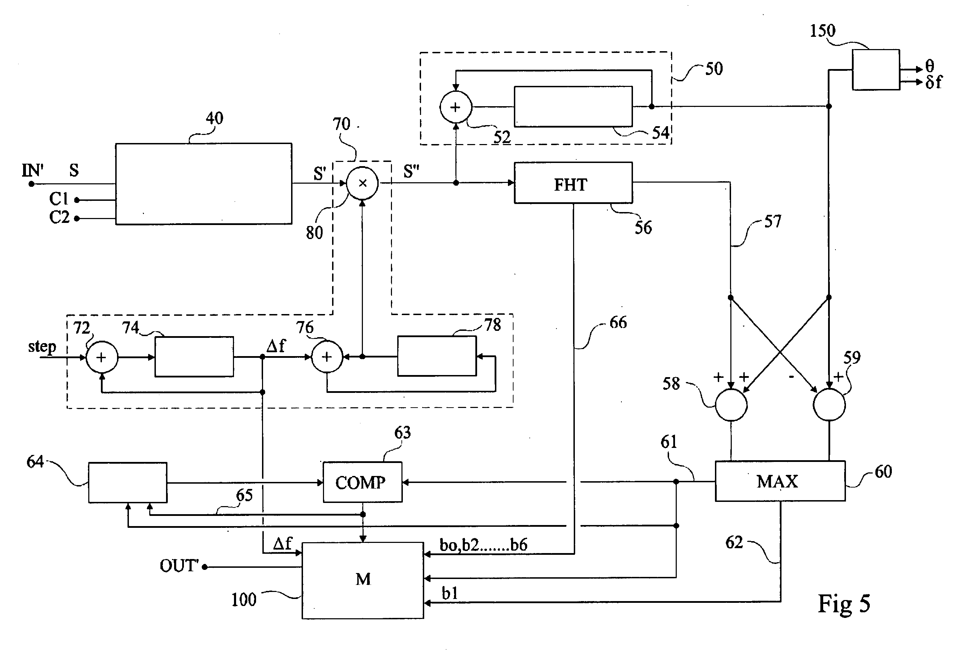

Les figures 4 et 5 représentent des circuits de validation et de décodage capables d'affirmer si le résultat fourni par le circuit 4 est juste ou non. Dans un souci de simplicité, on va d'abord décrire la figure 4, qui représente un circuit simplifié par rapport à celui de la figure 5 et dans lequel le décalage de fréquence est supposé nul.

En figure 4, une entrée IN' reçoit les symboles au fur et à mesure de leur réception, en même temps qu'ils sont fournis à l'entrée IN du circuit 4. Les entrées IN et IN' peuvent d'ailleurs être une même et unique entrée. Les symboles reçus sur l'entrée IN' sont fournis à un module de stockage et de traitement 40. Le module 40 reçoit les échantillons au fur et à mesure de leur arrivée et stocke les 90 échantillons les plus récemment arrivés. Le module 40 comporte deux entrées de commande C1 et C2.

L'entrée de commande C1 est reliée à la sortie OUT du circuit 4. Lorsque le circuit 4 émet un signal "start frame", celui-ci est fourni au module 40 qui garde en mémoire les 90 échantillons susceptibles de former un en-tête valide. En outre, dans le module 40, les 90 symboles S stockés sont modifiés pour fournir des échantillons S' de sorte que les symboles S' fournis par le module 40 sont, dans le cas d'un signal idéal, tous égaux à e^{jθ} pour la partie SOF (à un écart de fréquence Δf près) et à + ou - e^{jθ} pour la partie PLS (on suppose qu'a eu lieu la partie de la démodulation π/2.BPSK consistant à faire subir une rotation de π/2 à tous les symboles impairs, dans le sens inverse de ce qui a été fait dans le démodulateur). Pour obtenir les symboles S' de la partie SOF, les symboles S de la partie SOF sont multipliés par +1 ou par -1 selon la valeur connue des bits de la séquence connue utilisée pour la partie SOF. Pour obtenir les symboles S' de la partie PLS, les symboles S de la partie PLS sont multipliés par +1 ou par -1 selon la valeur connue des bits du mot UW. Les multiplications par +1 ou -1 des parties SOF et PLS sont cohérentes de façon à ce que les 90 échantillons S' fournis par le module 40 soient égaux ou opposés (aux erreurs de phase, de fréquence et de bruit près).

Les symboles S' sont fournis à un module 50 de corrélation des 26 symboles de la partie SOF. Il s'agit dans ce cas d'une corrélation absolue, et non plus d'une corrélation différentielle comme en figure 3. En figure 4, le module 50 est un accumulateur qui comprend un additionneur 52 et un registre 54. L'additionneur 52 reçoit le symbole S' courant ainsi que la sortie du registre 54. Le registre 54, initialement mis à zéro, reçoit la sortie de l'additionneur 52 et fournit un résultat égal à la somme des symboles S' ayant transité par lui. Après que les 26 symboles du SOF ont été traités, le signal en sortie du module 50 représente la corrélation des 26 symboles de l'en-tête supposé avec les symboles connus de la partie SOF, du fait de la transformation des symboles S en symboles S' dans le module 40.

Les symboles S' sont aussi fournis à un module 56, noté FHT, qui utilise la transformée rapide de Hadamard et effectue la corrélation des 64 symboles de la partie PLS de façon à obtenir les 128 corrélations possibles pour les 128 mots de code possibles. L'inventeur a par ailleurs simplifié le calcul des corrélations en remarquant que, selon la valeur du bit b1 du mot de code, le signe de la corrélation était changé et que, selon la valeur du bit b0 du mot de code, les symboles de la partie PLS étaient deux à deux égaux ou opposés. Ainsi, dans l'implémentation représentée en figure 4, le module 56 fournit de façon successive 2 fois 32 résultats de corrélation.

En effet, si l'on suppose que b0=0, les symboles sont égaux deux à deux et l'on peut opérer sur des paires de symboles, en additionnant les symboles deux à deux. Il reste alors à effectuer 64 corrélations à l'aide de 32 éléments correspondant aux bits b1 à b6 du mot de code. Comme par ailleurs le signe de la corrélation est inversé si b1=0, 32 corrélations seulement sont effectuées et le signe en est inversé pour trouver les corrélations correspondant à l'autre valeur de b1. Ainsi, le module 56 fournit 2 fois 32 corrélations, qui sont transmises, par exemple sous forme séquentielle, sur une ligne 57. Par une ligne 66, le module 56 fournit les bits b0, b2, b3, b4, b5 et b6 du mot de code associé à la corrélation fournie sur la ligne 57.

La ligne 57 est reliée à deux additionneurs 58 et 59, également reliés au module 50. L'additionneur 58 effectue la somme des résultats de corrélation issus des modules 50 et 56. L'additionneur 59 effectue la différence entre la corrélation issue du module 50 et celle issue du module 56. Les additionneurs 58 et 59 sont reliés à un module 60 noté "MAX". Le module 60 examine les modules des résultats issus des additionneurs 58 et 59, qui sont des nombres complexes, et fournit le module le plus grand, désigné ci-après par maximum de corrélation ou plus simplement maximum, sur une ligne 61. En outre, le module 60 détermine la valeur du bit b1 (le résultat de plus fort module est fourni par la sortie de l'additionneur 58 si le bit b1 est égal à 0 et par la sortie de l'additionneur 59 si le bit b1 est égal à 1). La valeur du bit b1 est fournie par le module 60 sur une ligne 62.

Via la ligne 61, le module 60 est connecté à un module de comparaison 63 noté "COMP" et à un module de mémorisation 64. Le module 64 mémorise le maximum le plus grand qui a été fourni auparavant par le module 60. La valeur mémorisée dans le module 64 est comparée dans le module 63 au maximum courant fourni par le module 60. Si la valeur mémorisée dans le module 64 est plus grande que le maximum fourni par le module 60, la valeur mémorisée dans le module 64 reste inchangée et le module 56 fournit une autre corrélation pour un autre mot de code. Si la valeur mémorisée dans le module 64 est plus petite que le maximum fourni par le module 60, le comparateur 63 fournit sur une ligne 65 un ordre au module 64 pour qu'il mémorise le maximum fourni par le module 60. L'ordre véhiculé par la ligne 65 commande aussi un module 100 noté M qui mémorise la valeur du maximum de corrélation fourni par le module 60, conjointement avec le mot de code correspondant, par le module 56 par la ligne 66 pour les bits b0, b2, b3, b4, b5 et b6 et par le module 60 pour le bit b1.

Lorsque les 32 corrélations issues du module 56 pour le bit b0=0 ont été testées, le module 56 réalise un nouveau calcul de 32 corrélations correspondant au bit b0=1. D'une façon semblable, les maxima de corrélation sont stockés dans le module 100 et, lorsque les 128 cas de corrélation ont été examinés, le module 100 renferme la valeur maximale de la corrélation, associée au mot de code qui l'a produite.

On va maintenant décrire la figure 5, où de mêmes références représentent de mêmes éléments qu'en figure 4. On reconnaît ainsi en figure 5 les modules 40, 50, 56, 60, 63, 64 et 100, ainsi que les additionneurs 58 et 59.

En figure 5, le circuit de validation et de décodage tient compte des décalages de phase entre échantillons. Pour ce faire, un module 70 est inséré entre le module 40 et les modules de corrélation 50 et 56.

En figure 5, le module 70 comprend un additionneur 72, un registre 74, un additionneur 76, un registre 78 et un module multiplieur 80.

L'additionneur 72 a deux entrées. Une entrée de l'additionneur 72 reçoit une valeur "step" qui fixe un pas d'incrémentation pour les décalages de fréquence. L'autre entrée de l'additionneur 72 est reliée à la sortie du registre 74. Le registre 74 fournit une valeur de décalage de fréquence Δf, qui correspond à un incrément de phase entre deux symboles consécutifs. Le registre 74 conserve la valeur Δf constante pour toute la série d'essais portant sur les 128 corrélations correspondant aux différents mots de code possibles et à cette valeur de décalage de fréquence. Au début du processus, la valeur du décalage de fréquence est par exemple choisie égale à zéro. Lorsque les 128 corrélations ont été examinées, la valeur du décalage de fréquence passe à la valeur "step" et les 128 corrélations correspondant à cette valeur de décalage de fréquence sont examinées. Le décalage de fréquence passe ensuite à la valeur 2."step" et ainsi de suite jusqu'au maximum que l'on souhaite tester pour le décalage de fréquence.

La valeur Δf est fournie à une entrée de l'additionneur 76, qui reçoit sur son autre entrée la sortie du registre 78, pouvant être chargée initialement à zéro, bien que ce ne soit pas obligatoire. La sortie de l'additionneur 76 attaque l'entrée du registre 78. La sortie du registre 78 est également reliée au module multiplieur 80. L'ensemble formé par l'additionneur 76 et le registre 78 opère comme un accumulateur qui stocke, à chaque symbole, des valeurs 0, Δf, 2Af, 3Δf, et ainsi de suite jusqu'à 89 Δf. Le registre 78 fournit ainsi une information de phase ϕ qui augmente régulièrement de Δf à chaque échantillon. L'information de phase ϕ est fournie au module multiplieur 80, qui multiplie le symbole S' issu du module 40 par la valeur e^{jϕ}. Ainsi, les corrélations effectuées par les modules 50 et 56 portent sur des échantillons S" présentant l'un par rapport à l'autre un décalage de phase correspondant à Δf. Lorsque les calculs de corrélation pour les 128 mots de code différents ont été réalisés pour le décalage de phase Δf, le module 100 stocke, pour le décalage de phase Δf, le maximum obtenu pour la corrélation ainsi que le mot de code correspondant.

Ensuite, le module 70 fournit un autre jeu de 90 symboles S" ayant subi un autre décalage de phase les uns par rapport aux autres et les 128 corrélations sont déterminées à l'aide de ces symboles. A chaque essai, le module 100 stocke la valeur maximale de corrélation obtenue, la valeur du mot de code et la valeur du décalage de phase associées. Lorsque tous les essais souhaités de décalage de phase ont été effectués, on sélectionne celui qui a fourni la corrélation la plus forte. Le module 100 renferme alors, pour la corrélation la plus forte, la valeur du mot de code, la valeur du décalage de fréquence et la valeur du maximum de corrélation correspondant à ces paramètres.

On examine alors la valeur du maximum de corrélation pour valider ou non l'en-tête. Par exemple, si le maximum de corrélation est supérieur à un seuil, on considérera que l'en-tête testé est un en-tête correct. Sinon, on considérera que les 90 symboles testés ne correspondent pas à un en-tête et on recommencera à chercher un autre candidat en-tête à l'aide du circuit de la figure 3.

On notera que la durée de l'ensemble du traitement est plus faible que la durée d'une trame. Ainsi, quand l'en-tête est validé, le décalage de fréquence et le mot de code sont connus. Les circuits de démodulation pourront alors ajuster leur fréquence dès la trame suivante et, le mot de code étant décodé, la place de l'en-tête suivant est connue.

Pour le traitement de la trame suivante, on se trouve en régime établi et il n'est pas nécessaire de recourir au circuit de la figure 3 pour rechercher un candidat en-tête. Le circuit de la figure 3 pourra être inactivé, ou les candidats en-tête qu'il pourrait déterminer peuvent ne pas être pris en compte. Par exemple, l'entrée de commande C1 peut être rendue inactive. Le module 40 peut alors par exemple être commandé par une entrée de commande C2, représentée en figure 5, l'entrée de commande C2 étant activée pour permettre le stockage des 90 symboles de l'en-tête de la trame à décoder par le module 40.

En régime établi, le module 70 peut aussi être inactivé car le décalage de la fréquence porteuse est sensiblement connu, seul devant être réalisé un ajustement fin du décalage de fréquence, comme décrit ci-après. On notera ici que les éléments du module 70 sont en général présents dans des asservissements ou des boucles à verrouillage de phase utilisés lors des démodulations permettant d'extraire les symboles et il est inutile de dupliquer le module 70 en implémentant physiquement ses éléments dans le circuit de la figure 5. Il suffit en effet de prévoir l'utilisation de ces éléments existants par ailleurs lors de la première acquisition d'un en-tête.

En régime établi, le module 40 stocke les 90 symboles de l'en-tête de la trame à analyser en vue des calculs de corrélation portant sur les 128 mots de code possibles. A l'issue des 128 corrélations, l'en-tête se trouve décodé comme décrit précédemment et le mot de code est déterminé. Dans un mode de réalisation, le mot de code est fourni sur une ligne non représentée au module 40. Le module 40, dans une fonction qui n'a pas été encore décrite, utilise le mot de code pour transformer les 64 symboles de la partie PLS de façon que les symboles issus du module 40 soient tous sensiblement égaux en absence de bruit. Seule subsiste entre eux une différence résiduelle de phase, qui va être évaluée dans un module 150 de la manière décrite ci-après. En effet, lorsqu'ils sont modifiés pour être tous sensiblement égaux, les symboles S' sont de la forme: S"'ₙ = A.e^{j(0+nδf)}, δf étant une erreur de fréquence résiduelle qu'il est nécessaire de connaître pour décoder efficacement les symboles de données. Dans un mode de réalisation, on fait passer un nombre déterminé de symboles S"'ₙ de l'en-tête dans le corrélateur 50 pour faire leur somme. Dans un exemple pratique, on additionne les 90 symboles S"', la phase de la somme obtenue correspondant à celle de l'émetteur et permettant de démoduler correctement les symboles qui suivent. Puis, on additionne les 30 premiers symboles de l'en-tête puis on additionne les 30 derniers. Les résultats des deux additions sont fournis à un module 150 qui calcule les phases moyennes des 30 premiers et des 30 derniers symboles de l'en-tête. Par la différence des phases moyennes précédemment calculées, le module 150 fournit l'erreur résiduelle de fréquence δf, utilisée pour asservir les démodulateurs lors de la détermination des symboles. Ces informations de phase et d'erreur de fréquence sont très efficaces car elles ont été obtenues par lissage sur respectivement 90 et 30 symboles.

Bien entendu, la présente invention est susceptible de diverses variantes et modifications qui apparaîtront à l'homme de l'art. En particulier, les divers éléments des figures 3, 4 et 5 peuvent être agencés différemment. Seules les fonctions de ces éléments sont importantes et l'on peut par exemple scinder un élément en plusieurs ou au contraire grouper plusieurs éléments entre eux.

Aussi, les fonctions peuvent varier dans une certaine mesure. Par exemple, le circuit de la figure 3 peut opérer sur des symboles différentiels complexes et non sur leur partie réelle, comme cela est décrit.

Les circuits des figures 4 et 5 peuvent être très différents, même lorsqu'ils continuent à s'appliquer à la norme DVBS2. Par exemple, le module 40 peut ne faire que du stockage. La transformation en échantillons S' peut ne pas avoir lieu, les modules de corrélation des parties SOF et PLS étant alors adaptés. Les corrélations concernant la partie PLS peuvent être réalisées autrement, les additionneurs 58 et 59 n'étant alors peut-être pas nécessaires.

Le procédé et les circuits selon la présente invention peuvent trouver une application à la réception satellite. Par exemple, les circuits des figures 3 à 5 peuvent se trouver dans des décodeurs, des démodulateurs, des récepteurs mobiles ou non, des ordinateurs, des ordinateurs de poche (ou pda), des téléphones portables, etc.

## Revendications

1. Procédé pour déterminer un en-tête de trame formé d'échantillons ayant été codés de sorte qu'un échantillon présente soit la valeur A.e^{jθ} soit la valeur A.e^{j(θ+π)} et comportant au moins N1 premiers échantillons correspondant à une première séquence déterminée et N2 deuxièmes échantillons correspondant à une deuxième séquence faisant partie d'un ensemble de N deuxièmes séquences déterminées, les N2 deuxièmes échantillons étant soit égaux deux à deux, soit opposés deux à deux, comprenant :
a) une étape de corrélation portant sur N1 échantillons, dans laquelle une corrélation est effectuée entre le produit d'un échantillon et du conjugué d'un échantillon adjacent et les valeurs correspondantes de la première séquence pour produire un premier résultat ;
b) une étape de corrélation portant sur N2 échantillons, dans laquelle est effectuée la somme des produits d'un échantillon d'un couple de deux échantillons successifs par le conjugué de l'autre échantillon du couple pour produire un deuxième résultat ;
c) une étape de détection d'un en-tête de trame à partir des premier et deuxième résultats ; et
d) une étape de validation de l'en-tête de trame détecté, **caractérisé en ce que** l'étape de validation comporte les étapes suivantes :
e) corriger les premiers et deuxièmes échantillons de l'en-tête détecté pour un décalage de fréquence déterminé ;
f) déterminer un maximum de corrélation portant sur les premiers et deuxièmes échantillons corrigés, étape au cours de laquelle sont effectuées d'une part la corrélation entre chaque premier échantillon corrigé et la valeur correspondante de la première séquence et d'autre part la corrélation entre chaque deuxième échantillon et la valeur qu'il aurait dans chacune des N deuxièmes séquences déterminées ;
g) recommencer, pour un nombre déterminé de valeurs de décalage de fréquence, les étapes de correction e) et de corrélation f) avec une autre valeur de décalage de fréquence ; et
h) valider l'en-tête de trame à partir des maxima de corrélation déterminés à l'étape f).

2. Procédé selon la revendication 1, dans lequel un en-tête de trame est détecté si la somme des parties réelles des corrélations réalisées aux étapes a) et b) est supérieure à un premier seuil.

3. Procédé selon la revendication 1, dans lequel l'en-tête de trame détecté est validé si le plus grand des modules des maxima de corrélation déterminés à l'étape f) est supérieur à un deuxième seuil.

4. Procédé selon l'une quelconque des revendications 1 à 3, dans lequel les premiers et deuxièmes échantillons proviennent de bits ayant subi une modulation de type π/2.BPSK.

5. Circuit pour déterminer un en-tête de trame formé d'échantillons ayant été codés de sorte qu'un échantillon présente soit la valeur A.e^{jθ} soit la valeur A.e^{j(θ+π)} et comportant au moins N1 premiers échantillons correspondant à une première séquence déterminée et N2 deuxièmes échantillons correspondant à une deuxième séquence faisant partie d'un ensemble de N deuxièmes séquences déterminées, les N2 deuxièmes échantillons étant soit égaux deux à deux, soit opposés deux à deux, comprenant :
a) un circuit de détection (4) pour détecter un en-tête de trame, le circuit comprenant :
a1) un premier circuit (5, 6, 20, 22, 24-i, 28) portant sur N1 échantillons, pour effectuer une corrélation entre le produit d'un échantillon et du conjugué d'un échantillon adjacent et les valeurs correspondantes de la première séquence ;
a2) un deuxième circuit (5, 6, 10, 12, 14-i, 18) portant sur N2 échantillons, pour effectuer la somme des produits d'un échantillon d'un couple de deux échantillons successifs par le conjugué de l'autre échantillon du couple ;
a3) un premier additionneur (30) pour additionner les résultats issus des premier et deuxième circuits ; et
a4) un module de détection (32) pour détecter un en-tête de trame lorsque la partie réelle du résultat fourni par le premier additionneur est supérieure à un premier seuil ; et
b) un circuit de validation et de décodage pour valider et décoder l'en-tête détecté par le circuit de détection, **caractérisé en ce que** le circuit de validation et de décodage comprend :
b1) un troisième circuit (40, 50) portant sur les N1 premiers échantillons de l'en-tête détecté, pour effectuer une corrélation entre chaque premier échantillon et la valeur correspondante de la première séquence ;
b2) un quatrième circuit (40, 56) portant sur les N2 deuxièmes échantillons de l'en-tête détecté, pour effectuer une corrélation entre chaque deuxième échantillon et la valeur qu'il aurait dans une deuxième séquence particulière :
b3) un cinquième circuit pour déterminer le plus grand des modules des sommes des corrélations effectuées par les troisième et quatrième circuits, N corrélations étant réalisées par le quatrième circuit et un en-tête étant validé si le plus grand des modules est supérieur à un deuxième seuil ; et
b4) un sixième circuit (70) pour fournir aux troisième et quatrième circuits des échantillons corrigés pour un décalage de fréquence de porteuse particulier.

6. Circuit selon la revendication 5, dans lequel le premier circuit comporte N1-2 premiers éléments à retard (D'i), N1-1 premiers modules de gain (24-i) couplés aux premiers éléments à retard et un deuxième additionneur (22) couplé aux premiers modules de gain, et dans lequel le deuxième circuit comporte N2 deuxièmes éléments à retard (Di), N2/2 deuxièmes modules de gain (14-i) couplés aux deuxièmes éléments à retard et un troisième additionneur (12) couplé aux deuxièmes modules de gain.

7. Circuit selon l'une quelconque des revendications 5 ou 6, dans lequel le paramètre N1 est égal à 26, le paramètre N2 est égal à 64 et le paramètre N est égal à 128, et dans lequel le quatrième circuit utilise une transformée rapide de Hadamard et fournit de manière séquentielle deux fois 32 corrélations réalisées à l'aide de N2/2 deuxièmes échantillons et dans lequel le cinquième circuit comprend un quatrième additionneur (58) pour effectuer la différence entre la corrélation effectuée par le troisième circuit et la corrélation effectuée par le quatrième circuit, un cinquième additionneur (59) pour effectuer la différence entre la corrélation effectuée par le troisième circuit et la corrélation effectuée par le quatrième circuit, un module (60) pour déterminer le module des résultats issus des quatrième et cinquième additionneurs et en sélectionner le plus grand.

8. Circuit selon l'une quelconque des revendications 5 à 7, comprenant en outre un septième circuit (150) propre à évaluer la moyenne des phases des premiers et deuxièmes échantillons d'un en-tête valide ainsi que la moyenne des phases de n1 échantillons d'un en-tête valide et la moyenne des phases de n2 échantillons d'un en-tête valide, pour en déduire la phase moyenne (θ) présentée par les échantillons et la variation de la phase moyenne des échantillons.

9. Circuit selon l'une quelconque des revendications 5 à 8, dans lequel les premiers et deuxièmes échantillons proviennent de bits ayant subi une modulation de type π/2.BPSK.

10. Décodeur ou démodulateur comprenant un circuit selon l'une quelconque des revendications 5 à 9.

11. Récepteur ou ordinateur ou téléphone portable comprenant un circuit selon l'une quelconque des revendications 5 à 9.

## Claims

1. A method for determining a frame header formed of samples having been coded so that a sample exhibits either value A.e^{jθ} or value A.e^{j(θ+π)} and comprising at least N1 first samples corresponding to a first determined sequence and N2 second samples corresponding to a second sequence belonging to a set of N second determined sequences, the N2 second samples comprising either pairs of equal values or pairs of opposite values, comprising:
a) a correlation step involving N1 samples, in which a correlation is performed between the product of a sample and of the conjugate of an adjacent sample and the corresponding values of the first sequence to generate a first result;
b) a correlation step involving N2 samples, in which is performed the sum of the products of a sample of a pair of two successive samples by the conjugate of the other sample in the pair to generate a second result;
c) a step of detection of a frame header based on the first and second results; and
d) a step of validation of the detected frame header, **characterized in that** the validation step comprises the steps of:
e) correcting the first and second samples of the detected header for a determined frequency shift;
f) determining a correlation maximum bearing on the first and second corrected samples, during which step are performed, on the one hand, the correlation between each first corrected sample and the corresponding value of the first sequence and, on the other hand, the correlation between each second sample and the value that it would have in each of the second N determined sequences;
g) resuming, for a determined number of frequency shift values, the steps of correction e) and of correlation f) with another frequency shift value; and
h) validating the frame header based on the maximum correlation values determined at step f).

2. The method of claim 1, wherein a frame header is detected if the sum of the real parts of the correlations performed at steps a) and b) is greater than a first threshold.

3. The method of claim 1, wherein the detected frame header is validated if the greater one of the modules of the maximum correlation values determined at step f) is greater than a second threshold.

4. The method of any of claims 1 to 3, wherein the first and second samples originate from bits having undergone a modulation of π/2.BPSK type.

5. A circuit for determining a frame header formed of samples having been coded so that a sample exhibits either value A.e^{jθ} or value A.e^{j(θ+π)} and comprising at least N1 first samples corresponding to a first determined sequence and N2 second samples corresponding to a second sequence belonging to a set of N second determined sequences, the N2 second samples comprising either pairs of equal values or pairs of opposite values, comprising:
a) a detection circuit (4) for detecting a frame header, the circuit comprising:
a1) a first circuit (5, 6, 20, 22, 24-i, 28) dealing with N1 samples, for performing a correlation between the product of a sample and of the conjugate of an adjacent sample and the corresponding values of the first sequence;
a2) a second circuit (5, 6, 10, 12, 14-i, 18) dealing with N2 samples, for performing the sum of the products of a sample of a pair of two successive samples by the conjugate of the other sample of the pair;
a3) a first adder (30) for adding the results originating from the first and second circuits; and
a4) a detection unit (32) for detecting a frame header when the real part of the result provided by the first adder is greater than a first threshold; and
b) a validation and decoding circuit for validating and decoding the header detected by the detection circuit, **characterized in that** the validation and decoding circuit comprises:
b1) a third circuit (40, 50) dealing with the N1 first samples of the detected header, for performing a correlation between each first sample and the corresponding value of the first sequence;
b2) a fourth circuit (40, 56) dealing with the N2 second samples of the detected header, for performing a correlation between each second sample and the value that it would have in a second specific sequence;
b3) a fifth circuit for determining the greatest of the modules of the sums of the correlations performed by the third and fourth circuits, N correlations being performed by the fourth circuit and a header being validated if the greatest of the modules is greater than a second threshold; and
b4) a sixth circuit (70) for providing the third and fourth circuits with corrected samples for a specific carrier frequency shift.

6. The circuit of claim 5, wherein the first circuit comprises N1-2 first delay elements (D'i), N1-1 first gain units (24-i) coupled with the first delay elements, and a second adder (22) coupled with the first gain units, and wherein the second circuit comprises N2 second delay elements (Di), N2/2 second gain units (14-i) coupled to the second delay elements, and a third adder (12) coupled to the second gain units.

7. The circuit of claim 5 or 6, wherein parameter N1 is equal to 26, parameter N2 is equal to 64, parameter N is equal to 128, and wherein the fourth circuit uses a fast Hadamard transform and sequentially provides twice 32 correlations performed by means of N2/2 second samples, and wherein the fifth circuit comprises a fourth adder (58) to calculate the difference between the correlation performed by the third circuit and the correlation performed by the fourth circuit, a fifth adder (59) to calculate the difference between the correlation performed by the third circuit and the correlation performed by the fourth circuit, a unit (60) for determining the module of the results delivered by the fourth and fifth adders and selecting the greatest one.

8. The circuit of any of claims 5 to 7, further comprising a seventh circuit (150) capable of evaluating the average of the phases of the first and second samples of a valid header as well as the average of the phases of n1 samples of a valid header and the average of the phases of n2 samples of a valid header, to deduce therefrom the average phase (θ) of the samples and the variation of the average phase of the samples.

9. The circuit of any of claims 5 to 8, wherein the first and second samples originate from bits having undergone a modulation of π/2.BPSK type.

10. A decoder or a demodulator comprising the circuit of any of claims 5 to 9.

11. A receiver or a computer or a cellular phone comprising the circuit of any of claims 5 to 9.

## Patentansprüche

1. Ein Verfahren zum Bestimmen eines Rahmenheaders, der aus Samples gebildet wird, die so kodiert sind, dass ein Sample entweder den Wert A.e^{jΘ} oder A.e^{j(Θ+π)} zeigt und wenigstens N1 erste Samples aufweist, die einer ersten bestimmten Sequenz entsprechen und N2 zweite Samples, die einer zweiten Sequenz entsprechen, welche zu einem Satz von N zweiten bestimmten Sequenzen gehört, wobei die N2 zweiten Samples entweder Paare von gleichen Werten oder Paare von gegensätzlichen Werten aufweisen, wobei das Verfahren folgende Schritte aufweist:
a) einen Korrelationsschritt, der N1 Samples einbezieht, in dem eine Korrelation zwischen dem Produkt eines Samples und von der Konjugierten eines benachbarten Samples und den entsprechenden Werten der ersten Sequenz ausgeführt wird, um ein erstes Ergebnis zu erzeugen;
b) einen Korrelationsschritt, der N2 Samples einbezieht, in dem die Summe von den Produkten eines Samples von einem Paar von zwei aufeinanderfolgenden Samples mit der Konjugierten des anderen Samples in dem Paar ausgeführt wird, um ein zweites Ergebnis zu erzeugen;
c) einen Schritt des Detektierens eines Rahmenheaders, basierend auf dem ersten und dem zweiten Ergebnis; und
d) einen Schritt des Validierens des detektierten Rahmenheaders, **dadurch gekennzeichnet, dass** der Validierungsschritt die folgenden Schritte aufweist:
e) Korrigieren des ersten und zweiten Samples des detektierten Headers für eine bestimmte Frequenzverschiebung;
f) Bestimmen eines Korrelationsmaximums, welches auf dem ersten und zweiten korrigierten Sample beruht, wobei während diesem Schritt einerseits die Korrelation zwischen jedem ersten korrigierten Sample und dem entsprechenden Wert der ersten Sequenz und andererseits die Korrelation zwischen jedem zweiten Sample und dem Wert den es in jedem der zweiten N bestimmten Sequenzen haben würde, ausgeführt wird;
g) Wiederaufnehmen, für eine bestimmte Anzahl von Frequenzverschiebungswerten, die Schritte des Korrigierens e) und des Korrelierens f) mit einem weiteren Frequenzverschiebungswert; und
h) Validieren des Rahmenheaders basierend auf den maximalen Korrelationswerten, die in dem Schritt f) bestimmt wurden.

2. Das Verfahren nach Anspruch 1, wobei ein Rahmenheader bestimmt wird, wenn die Summe der Realteile der Korrelationen, die in den Schritten a) und b) ausgeführt wurden größer ist als eine erste Schwelle.

3. Das Verfahren nach Anspruch 1, wobei der detektierte Rahmenheader validiert wird, wenn das größere von den Modulen der maximalen Korrelationswerte, die in dem Schritt f) bestimmt wurden, größer ist als eine zweite Schwelle.

4. Das Verfahren nach einem der Ansprüche 1 bis 3, wobei die ersten und zweiten Samples von Bits herrühren, die einer Modulation eines π/2.BPSK Typs unterzogen wurden.

5. Ein Schaltkreis zum Bestimmen eines Rahmenheaders, der aus Samples gebildet wird, die so kodiert sind, dass ein Sample entweder den Wert A.e^{jΘ} oder A.e^{j(Θ+π)} zeigt und wenigstens N1 erste Samples aufweist, die einer ersten bestimmten Sequenz entsprechen und N2 zweite Samples, die einer zweiten Sequenz entsprechen, welche einem Satz von N zweiten bestimmten Sequenzen gehört, wobei die N2 zweiten Samples entweder Paare von gleichen Werten oder Paare von gegensätzlichen Werten aufweisen, wobei der Schaltkreis Folgendes aufweist:
a) einen Detektionsschaltkreis (4) zum Detektieren eines Rahmenheaders, wobei der Schaltkreis Folgendes aufweist:
a1) einen ersten Schaltkreis (5, 6, 20, 22, 24-i, 28), der mit N1 Samples arbeitet, zum Ausführen einer Korrelation zwischen dem Produkt eines Samples und von der Konjugierten eines benachbarten Samples und den entsprechenden Werten der ersten Sequenz;
a2) einen zweiten Schaltkreis (5, 6, 10, 12, 14-i, 18), der mit N2 Samples arbeitet, zum Ausführen der Summe von den Produkten eines Samples von einem Paar von zwei aufeinanderfolgenden Samples mit der Konjugierten des anderen Samples in dem Paar;
a3) einen ersten Addierer (30) zum Addieren der Ergebnisse, die von dem ersten und dem zweiten Schaltkreis herrühren; und
a4) eine Detektionseinheit (32) zum Detektieren eines Rahmenheaders, wenn der Realteil des Ergebnisses, das von dem ersten Addierer bereitgestellt wurde, größer ist als eine erste Schwelle; und
b) einen Validierungs- und Dekodierungsschaltkreis zum Validieren und Dekodieren des Headers, der durch den Detektionsschaltkreis, detektiert wurde, **dadurch gekennzeichnet, dass** der Validierungs- und Dekodierungsschaltkreis Folgendes aufweist:
b1) einen dritten Schaltkreis (40, 50), der mit den N1 ersten Samples des detektierten Headers arbeitet, um eine Korrelation zwischen jedem ersten Sample und dem entsprechenden Wert der ersten Sequenz auszuführen;
b2) einen vierten Schaltkreis (40, 56), der mit den N2 zweiten Samples des detektierten Headers arbeitet, um eine Korrelation zwischen jedem zweiten Sample und dem Wert den es in einer zweiten bestimmten Sequenz haben würde auszuführen;
b3) einen fünften Schaltkreis zum Bestimmen des größten der Module der Summen der Korrelationen, die durch den dritten und vierten Schaltkreis ausgeführt wurden, wobei N Korrelationen durch den vierten Schaltkreis ausgeführt werden und ein Header validiert wird, wenn das größte der Module größer ist als eine zweite Schwelle; und
b4) ein sechster Schaltkreis (70) zum Bereitstellen des dritten und vierten Schaltkreises mit korrigierten Samples für eine bestimmte Trägerfrequenzverschiebung.

6. Der Schaltkreis nach Anspruch 5, wobei der erste Schaltkreis N1-2 erste Verzögerungselemente (D'i), N1-1 erste Verstärkungseinheiten (24-i) aufweist, die mit den ersten Verzögerungselementen gekoppelt sind, und einen zweiten Addierer (22), der mit den ersten Verstärkungseinheiten gekoppelt ist, und wobei der zweite Schaltkreis N2 zweite Verzögerungselemente (Di) aufweist, N2/2 zweite Verstärkungseinheiten (14-i), die mit den zweiten Verzögerungselementen gekoppelt sind, und einen dritten Addierer (12), der mit den zweiten Verstärkungseinheiten gekoppelt ist.

7. Der Schaltkreis nach Anspruch 5 oder 6, wobei der Parameter N1 gleich 26 ist, der Parameter N2 gleich 64 ist, der Parameter N gleich 128 ist, und wobei der vierte Schaltkreis eine schnelle Hadamard-Transformation verwendet und nacheinander zweimal 32 Korrelationen bereitstellt, die anhand von N2/2 zweiten Samples ausgeführt werden, und wobei der fünfte Schaltkreis einen vierten Addierer (58) aufweist, um die Differenz zwischen der Korrelation, die durch den dritten Schaltkreis ausgeführt wurde, und der Korrelation, die durch den vierten Schaltkreis ausgeführt wurde, zu berechnen, einen fünften Addierer (59) aufweist, um die Differenz zwischen der Korrelation, die durch den dritten Schaltkreis ausgeführt wurde, und der Korrelation, die durch den vierten Schaltkreis ausgeführt wurde, zu berechnen, eine Einheit (60) zum Bestimmen der Module der Ergebnisse, die durch den vierten und den fünften Schaltkreis geliefert wurden und zum Auswählen des Größten.

8. Der Schaltkreis nach einem der Ansprüche 5 bis 7, wobei der Schaltkreis ferner einen siebten Schaltkreis (150) aufweist, der geeignet ist den Mittelwert der Phasen der ersten und zweiten Samples eines zulässigen Headers auszuwerten, sowie den Mittelwert der Phasen von n1 Samples eines zulässigen Headers und den Mittelwert der Phasen von n2 Samples eines zulässigen Headers, und der geeignet ist davon den Phasenmittelwert (Θ) der Samples abzuleiten und die Variation des Phasenmittelwerts der Samples.

9. Der Schaltkreis nach einem der Ansprüche 5 bis 8, wobei die ersten und zweiten Samples von Bits herrühren, die einer Modulation eines π/2.BPSK Typs unterzogen wurden.

10. Ein Dekoder oder ein Demodulator, der den Schaltkreis nach einem der Ansprüche 5 bis 9 aufweist.

11. Ein Empfänger oder ein Computer oder ein Mobiltelefon, das den Schaltkreis nach einem der Ansprüche 5 bis 9 aufweist.
